# EUROPÄISCHE PATENTANMELDUNG

(11) **EP 1 426 133 A1**
(43) Veröffentlichungstag der Anmeldung: **09.06.2004**
(21) Anmeldenummer: 02406061.8
(22) Anmeldetag: 06.12.2002
(51) Int. Cl.: B23K 11/00, B23K 11/31, F16F 1/18

(54) **Federelement**

(71) Anmelder: H.A. SCHLATTER AG, CH-8952 Schlieren Zürich (CH)
(72) Erfinder: Meier, Robert, 8907 Wettswil (CH); Rappold, Dietmar, 8953 Dietikon (CH)
(74) Vertreter: Roshardt, Werner Alfred, Dipl.-Phys.

(57) **Zusammenfassung**

Ein Federelement (1) weist zwei elastische Federmittel (2, 3) auf, welche beidseitig durch je ein Verbindungselement (4 bzw. 5) gehalten sind. Ein zu federndes Objekt ist an einem der Verbindungselemente (5) angeordnet, während der Bewegung der Feder bleibt seine Orientierung konstant, z.B. horizontal. Das Federelement (1) weist keine mechanisch anspruchsvollen Bauelemente auf und ist unempfindlich auf Verschmutzungen. Es eignet sich insbesondere zum Nachsetzen einer Schweisselektrode während eines Schweissvorgangs. Dazu ist eine Elektrode auf dem Kontaktstück (5) angeordnet. Sie wird während dem Nachsetzvorgang parallel bewegt, so dass der Kontakt zwischen Elektrode und Werkstück erhalten bleibt.

## Beschreibung

### Technisches Gebiet

Die Erfindung betrifft ein Federelement und dessen Verwendung in einer Schweissmaschine zum Nachsetzen einer Schweisselektrode während eines Schweissvorgangs.

### Stand der Technik

Eine Möglichkeit, metallische Werkstücke miteinander zu verbinden, ist das sogenannte Widerstandspressschweissen. Dabei erzielt man eine Erwärmung sich berührender Werkstückteile durch einen hindurchfliessenden elektrischen Strom. Dazu werden vor Beginn des Schweissvorgangs zwei Elektroden mit einem gewissen Druck auf die zu verbindenden Werkstücke aufgesetzt. Nach Erreichen der Schweisstemperatur werden die zu verbindenden Werkstückteile an ihrer Berührungsstelle unter Druck vereinigt. Die Vereinigung führt aber dazu, dass der Druck zwischen den Elektroden und den Werkstücken nachlässt. Damit der Schweissvorgang fortgesetzt werden kann, muss der Kontakt zwischen dem Werkstück und den Elektroden durch ein so genanntes Nachsetzen einer oder beider Elektroden aufrechterhalten bleiben. Das Nachsetzen muss schnell und so erfolgen, dass die Elektrode auf ihrer ganzen Fläche gleichmässigen Kontakt mit dem Werkstück behält.

Bisher wird eine der Elektroden z. B. durch hydraulische oder pneumatische Mittel nachgesetzt, wobei diese allerdings oft nicht schnell genug reagieren. In dieser Hinsicht besser sind mechanische Federelemente - allerdings dürfen diese nicht zu komplex aufgebaut sein, falls sie unterhalb der Schweissstelle angeordnet sind. An dieser Stelle tritt nämlich durch den Schweissvorgang eine starke Verschmutzung auf, welche die Funktion des Federelements nicht beeinträchtigen darf. Das Federelement muss zudem in der Regel eine hohe Federkonstante aufweisen und schnell auf den Druckverlust reagieren können.

Bisher existiert kein Federelement, welches trotz diesen Randbedingungen eine gute Federcharakteristik insbesondere zum Nachsetzen einer Schweisselektrode aufweist.

### Darstellung der Erfindung

Aufgabe der Erfindung ist es, ein dem eingangs genannten technischen Gebiet zugehörendes Federelement zu schaffen, welches einfach und robust aufgebaut ist und eine Federcharakteristik aufweist, die insbesondere zum schnellen Nachsetzen einer Schweisselektrode geeignet ist.

Die Lösung der Aufgabe ist durch die Merkmale des Anspruchs 1 definiert. Gemäss der Erfindung weist das Federelement ein erstes Federmittel, ein zweites Federmittel, ein erstes Verbindungsstück und ein zweites Verbindungsstück auf. Das erste und das zweite Federmittel sind aus einem elastischen Material gefertigt und weisen im Wesentlichen die gleiche federnde Länge auf. Sie sind an einem ersten Ende am ersten Verbindungselement und am gegenüberliegenden zweiten Ende am zweiten Verbindungselement befestigt. Unter Belastung der Feder wird die Orientierung des zweiten Verbindungselements bezüglich der Orientierung des ersten Verbindungselements beibehalten.

Das erfindungsgemässe Federelement weist die Vorteile einer Blattfeder auf, indem es einfach aufgebaut und damit robust und unempfindlich auf Verschmutzungen ist und indem es eine Federcharakteristik aufweist, die dazu geeignet ist, eine Schweisselektrode schnell nachzusetzen. Dies ist z.B. mit einer Schraubenfeder aufgrund deren Federcharakteristik kaum möglich, eine solche ist zudem anfällig auf Verschmutzungen. Das erfindungsgemässe Federelement vermeidet aber den grossen Nachteil der Blattfeder, welcher darin besteht, dass sich das freie (gefederte) Ende der Blattfeder auf einem Kreisabschnitt bewegt, dessen Radius der federnden Länge der Blattfeder entspricht. Die Orientierung dieses Endes der Blattfeder (und damit auch der daran befestigten, gefederten Objekte) ändert sich gleichermassen. Ein ursprünglich horizontales gefedertes Objekt neigt sich also mit grösser werdender Verformung der Blattfeder.

Das erfindungsgemässe Federelement hingegen verhält sich wie ein Parallelogrammlenker, indem das zweite Verbindungselement, welches insbesondere das Kontaktstück zu einem gefederten Objekt bildet, seine Orientierung während des Federwegs beibehält: Umfasst das zweite Verbindungselement z.B. auf seiner Oberseite eine horizontale Auflagefläche, so bleibt diese auch dann horizontal, wenn das erfindungsgemässe Federelement verformt wird. Im Unterschied z.B. zu einem Parallelogrammlenker in Verbindung mit einer externen Feder ist das erfindungsgemässe Federelement aber bedeutend einfacher aufgebaut und damit sowohl preisgünstiger als auch robuster und widerstandsfähiger gegen Verschmutzungen.

Die Federmittel sind vorzugsweise als Federblätter ausgebildet, d.h. sie sind gerade und weisen einen konstanten flachen, insbesondere rechteckigen, Querschnitt auf. Es sind aber auch andere Federmittel geeignet, z.B. solche bei denen sich der Querschnitt zwischen dem ersten und dem zweiten Ende verjüngt oder erweitert oder solche mit gekrümmtem Verlauf. Wichtig ist dabei, dass sich die beiden Federmittel unter Belastung des Federelements so verformen, dass die relative Orientierung der beiden Verbindungselemente beibehalten wird. Dies wird insbesondere dadurch erreicht, dass beide Federmittel eine unter der Verformung im Wesentlichen konstante und gleiche federnde Länge aufweisen und dass sie im Wesentlichen senkrecht zu dieser federnden Länge elastisch reagieren, wobei die Reaktion beider Federmittel auf eine bestimmte ausgeübte Kraft gleich ist.

Die Federmittel können so angeordnet sein, dass die Hauptfläche des ersten Federmittels im Wesentlichen parallel zur Hauptfläche des zweiten Federmittels ist.

Die Übergangsstellen zwischen den Federmitteln und dem ersten Verbindungselement bzw. zwischen den Federmitteln und dem zweiten Verbindungselement funktionieren wie die Gelenke des Parallelogrammlenkers. Die federnde Länge der Federmittel zwischen der Befestigung am ersten und am zweiten Verbindungselement stellt die gewünschte Federkraft bereit.

Anstelle von zwei parallelen Federmitteln können auch drei oder mehr Federmittel vorgesehen werden. Dadurch kann die Federcharakteristik, insbesondere die Federkonstante, beeinflusst werden, trotzdem wird aber die Orientierung des zweiten Verbindungselements beibehalten.

Vorzugsweise ist das Federelement aus einem einheitlichen Material gefertigt. Dadurch werden einerseits Probleme, wie sie bei Übergangsstellen zwischen verschiedenen Metallen auftreten, z.B. Säurekorrosion, vermieden. Andererseits vereinfacht sich die Herstellung.

Mit Vorteil ist das Federelement einstückig ausgebildet (d.h. es ist ein massives Formteil). Dadurch werden Fugen oder Ritzen vermieden, in welchen sich Schmutz ansammelt, der die Funktion des Federelements beeinträchtigen kann. Durch die einstückige Ausbildung werden überdies keine mechanisch anfälligen Befestigungselemente wie z.B. Schrauben oder Nieten benötigt, was die Robustheit und die Lebensdauer des erfindungsgemässen Federelements weiter verlängert.

Anstelle des ganzen Federelements mit den Verbindungselementen und den Federmitteln können auch nur Teile davon einstückig ausgebildet sein, z.B. das erste Verbindungselement und die Federmittel bzw. das zweite Verbindungselement und die Federmittel. Sollen einzelne Teile, z.B. die Federmittel, andere physikalische Eigenschaften aufweisen als andere Teile, z.B. die Verbindungselemente, kann das einstückige Federelement aus verschiedenen Materialien, insbesondere Metallen, hergestellt, z.B. gegossen, werden.

Mit Vorteil werden die Federmittel, z.B. Federblätter, aus Stahl, insbesondere aus Werkzeugstahl, gefertigt. Dieses Material weist mechanische Eigenschaften auf, welche eine gute Federcharakteristik des Federelements ergeben, die insbesondere zum Nachsetzen von Schweisselektroden geeignet ist. Werkzeugstahl ist zudem preisgünstig, einfach zu bearbeiten und wenig anfällig auf Korrosion.

Mit Vorteil weist das Federelement zusätzlich eine Abstützung auf, welche den Federweg des Federelements begrenzt, so dass eine Überlastsicherung geschaffen wird. Jedes Federmaterial weist einen elastischen Bereich auf, in welchem das Material vollständig wieder die ursprüngliche Form annimmt, wenn die externen Verformungskräfte nicht mehr wirken. Wird der elastische Bereich durch zu grosse Kräfte überschritten, bleibt eine permanente, plastische Verformung zurück. Durch die Abstützung wird eine solche permanente Verformung verhindert. Die Abstützung beschränkt zudem den Federweg, was bei vielen technischen Anwendungen von Vorteil ist.

In einer Schweissmaschine wird das erfindungsgemässe Federelement mit besonderem Vorteil eingesetzt. Durch seine Widerstandsfähigkeit gegen Verschmutzungen und durch seine Robustheit besitzt es auch in einer solchen Umgebung eine hohe Lebensdauer.

Mit Vorteil wird das erfindungsgemässe Federelement zum Nachsetzen einer Schweisselektrode eingesetzt. Dazu wird die Schweisselektrode am zweiten Verbindungselement des Federelements, welches ein Kontaktstück bildet angeordnet, so dass sie während dem Schweissvorgang durch die Federkraft nachgesetzt wird. Durch die gleichbleibende Orientierung der gefederten Schweisselektrode bleibt diese auch beim Nachsetzen durch ihre ganze Kontaktfläche mit den Werkstücken in Berührung.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein erfindungsgemässes Federelement;
- Fig. 2: die Verwendung des erfindungsgemässen Federelements zum Nachsetzen einer Schweisselektrode in einer Schweissmaschine.

Grundsätzlich sind in den Figuren gleiche Teile mit gleichen Bezugszeichen versehen.

### Wege zur Ausführung der Erfindung

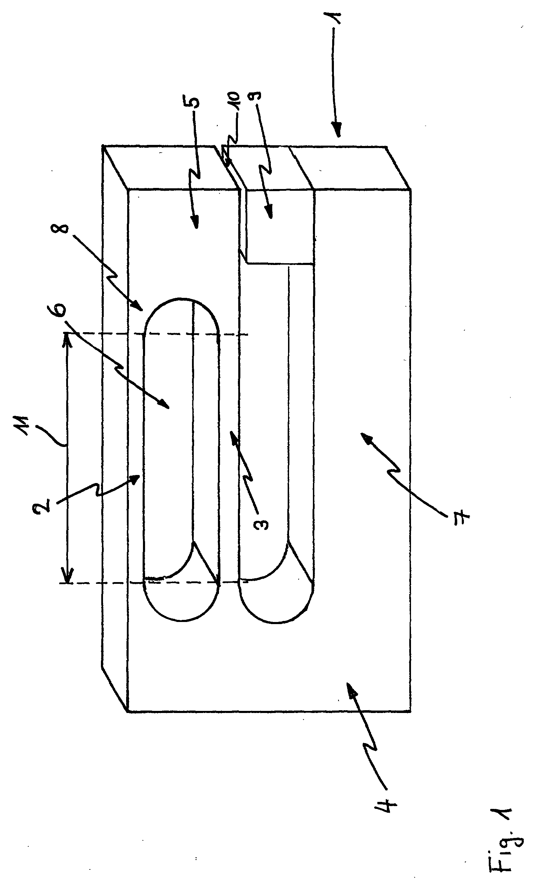

Figur 1 zeigt ein erfindungsgemässes Federelement. Das Federelement 1 ist einstückig aus Werkzeugstahl ausgebildet und im Wesentlichen U-förmig. Der untere Schenkel 7 ist massiv und liegt auf dem Untergrund auf. Der obere Schenkel 8 weist eine längliche ovale Öffnung 6 auf, so dass ein oberes erstes Federblatt 2 und ein unteres zweites Federblatt 3 oberhalb bzw. unterhalb der Öffnung 6 gebildet werden. Die Federblätter 2, 3 weisen dieselben Dimensionen auf und verformen sich unter Krafteinwirkung auf dieselbe Weise. Die Öffnung 6 erstreckt sich nicht in einen Bereich am freien Ende des oberen Schenkels 8, so dass dort das zweite Verbindungselement, ein Kontaktstück 5 gebildet wird. Der untere Schenkel 7 und die Basis des U-förmigen Federelements bilden zusammen das erste Verbindungselement, die Halterung 4 für die Federblätter 2, 3 und das Kontaktstück 5.

Die Federblätter 2, 3 weisen dieselbe gefederte Länge 11 auf, welche der Strecke zwischen dem Übergang zwischen der Halterung 4 und den Federblättern 2, 3 und dem Übergang zwischen den Federblättern 2, 3 und dem Kontaktstück 5 entspricht. Die genannten Übergänge wirken als "Gelenke", so dass sich das Federelement wie ein Parallelogrammlenker verhält. Die Oberfläche des Kontaktstücks 5 bleibt also auch bei der Kompression des Federelements 1 parallel zu ihrer Ruhelage.

Das gefederte Objekt liegt auf dem Kontaktstück 5 auf, bzw. ist am Kontaktstück 5 befestigt, z.B. an dessen vorderem, den Federblättern abgewandtem Ende. Auf dem unteren Schenkel 7 liegt am offenen Ende des U-förmigen Federelements 1 eine Abstützung 9 auf. Der Federweg des Federelements 1 wird dadurch begrenzt, dass die Unterseite des Kontaktstücks 5 bei einem gewissen maximalen Federweg auf die Abstützung 9 zu liegen kommt. Der maximale Federweg entspricht der Breite des Spalts 10, welcher bei entlastetem Federelement 1 zwischen dem Kontaktstück 5 und der Abstützung 9 gebildet wird.

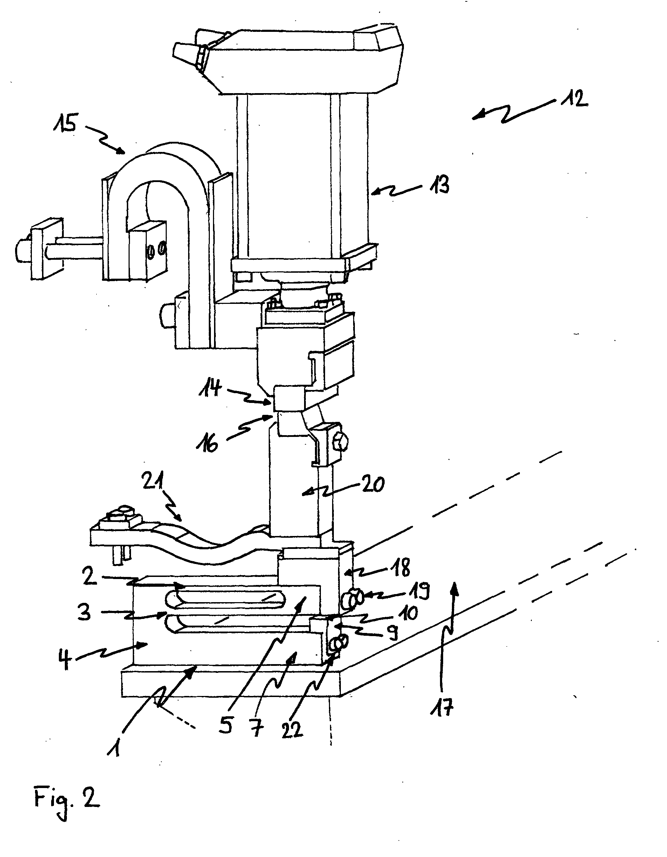

Figur 2 zeigt die Verwendung des erfindungsgemässen Federelements zum Nachsetzen einer Schweisselektrode in einer Schweissmaschine. Die Schweissmaschine 12 umfasst eine Schweisspresse 13, welche oberhalb der Schweissebene befestigt ist. Am unteren Ende der Schweisspresse 13 ist die obere Elektrode 14 angeordnet. Die Schweisspresse 13 ist vertikal verfahrbar, so dass die obere Elektrode 14 mit einem wählbaren Druck auf die zu verbindenden Werkstücke aufgesetzt werden kann. Die Stromzuführung zur oberen Elektrode erfolgt über ein flexibles Band 15, so dass die Bewegung der Schweisspresse nicht behindert wird.

Mit der oberen Elektrode 14 wirkt eine untere Elektrode 16 zusammen, welche unterhalb der Schweissebene auf einem Tisch 17 gelagert ist. Die untere Elektrode 16 kontaktiert die Werkstücke auf deren Unterseite. Der zwischen den beiden Elektroden 14, 16 fliessende Strom erwärmt das Werkstück, bis eine gewisse Schweisstemperatur erreicht ist. Darauf beginnen sich die Werkstücke zu verbinden. Dies führt zu einer Abnahme ihrer (gemeinsamen) Dicke und damit dazu, dass der Druck der Schweisspresse 13 und damit der oberen Elektrode 14 auf die Werkstücke abnimmt. Damit der Schweissvorgang bis zur vollständigen Verbindung der Werkstücke fortgesetzt werden kann, muss der Druck wieder aufgebaut bzw. konstant gehalten werden. Die hydraulischen oder pneumatischen Mittel der Schweisspresse sind dazu schlecht geeignet, weil sie nicht schnell genug auf die Druckabnahme reagieren können.

Die untere Elektrode 16 ist deshalb über das erfindungsgemässe Federelement 1 auf dem Tisch 17 gelagert. Dazu ist ein Befestigungsstück 18 mit dem Kontaktstück 5 verbunden. Das Befestigungsstück 18 ist L-förmig, wobei einer der Schenkel auf dem Kontaktstück 5 aufliegt, während der andere Schenkel mit der Vorderseite des Kontaktstücks 5 mittels zweier Schrauben 19 verschraubt ist. Auf dem Befestigungsstück 18 liegt ein Träger 20 auf, der die untere Elektrode 16 trägt. Damit die Federbewegung nicht behindert wird, erfolgt auch die Stromversorgung für die untere Elektrode durch ein flexibles Band 21.

Beim Aufsetzen der oberen Elektrode 14 auf die Werkstücke wird die Druckkraft über die Werkstücke auf das Federelement 1 übertragen, so dass dieses entsprechend dem gewählten Druck zusammengedrückt wird. Sobald sich die Werkstücke zu verbinden beginnen, nimmt der Druck ab und das Federelement entspannt sich nach und nach. Dadurch wird der Druck auf die Werkstücke konstant gehalten, bis der Schweissprozess abgeschlossen ist. Das Kontaktstück 5, damit auch das Befestigungsstück 18, der Träger 19 und schliesslich die untere Elektrode 16 behalten während der Bewegung des Federelements ihre Orientierung bei, sie werden parallel verschoben. Dadurch bleibt der anfangs hergestellte Kontakt der unteren Elektrode 16 zu den Werkstücken erhalten - es treten weder eine Verkantung und damit ein Verlust an Kontaktfläche, noch seitliche Kräfte auf die Werkstücke auf.

Der Weg des Federelements ist durch eine Abstützung 9 begrenzt, welche mittels zweier Schrauben 22 an der Vorderseite des unteren Schenkels 7 des Federelements 1 befestigt ist. In der Ruhelage schliessen die Abstützung 9 und das Kontaktstück 5 einen Spalt von ca. 1 mm ein. Durch das Aufsetzen der oberen Elektrode 14 auf die Werkstücke wird der Spalt verkleinert, im Extremfall liegt das Kontaktstück 5 zu Beginn des Schweissvorgangs auf der Abstützung 9 auf. Der maximale Druck wird also nicht durch das Federelement 1 begrenzt. Allerdings ist zu beachten, dass der Nachsetzvorgang erst dann beginnt, wenn der Druck einen gewissen Grenzwert unterschreitet. Dieser Grenzwert kann durch Wahl der Breite des Spalts 10 und damit durch Wahl einer bestimmten Abstützung 9 eingestellt werden. Natürlich muss sich das Federmaterial auch beim Aufsetzen auf die Abstützung 9 noch im elastischen Bereich befinden.

Durch die Wahl des elastischen Materials und der Dimensionen des Federelements 1, insbesondere der Dicke und der Tiefe der Federblätter 2, 3 kann die Federcharakteristik beeinflusst werden. Es können ausserdem noch weitere Federblätter vorgesehen werden, z.B. indem der obere Schenkel 8 mehrere gleichförmige übereinanderliegende Öffnungen aufweist. Das Federelement kann ausserdem aus verschiedenen Materialien hergestellt werden, wobei lediglich wichtig ist, dass alle Federblätter dieselben Federeigenschaften aufweisen, so dass die parallele Verschiebung des gefederten Objekts gewährleistet ist. Die Befestigung der Halterung muss nicht über einen unteren Schenkel zu einer Auflagefläche erfolgen. Die Halterung kann z.B. ebenfalls an einer Wand befestigt, z.B. verschraubt, sein.

Die Verwendung des Federelements erschöpft sich nicht auf die dargestellte Schweissmaschine, es hat überall dort Verwendung, wo eine robuste und wartungsarme Feder, insbesondere mit einer grossen Federkonstante, benötigt wird, welche ein Objekt mit gleich bleibender Orientierung führen kann.

Zusammenfassend ist festzustellen, dass das Federelement eine gute Federcharakteristik zum Nachsetzen einer Schweisselektrode aufweist sowie robust und unempfindlich auf Verschmutzungen ist.

## Patentansprüche

1. Federelement (1) mit einem ersten Federmittel (2), einem zweiten Federmittel (3), einem ersten Verbindungselement (4) und einem zweiten Verbindungselement (5), wobei das erste Federmittel (2) und das zweite Federmittel (3) aus elastischem Material gefertigt sind, eine im Wesentlichen gleiche federnde Länge (11) aufweisen und die genannten Federmittel (2, 3) an einem ersten Längsende am ersten Verbindungselement (4) und an einem dem ersten Längsende gegenüberliegenden zweiten Längsende am zweiten Verbindungselement (5) befestigt sind, so dass unter Belastung des Federelements eine Orientierung des zweiten Verbindungselements bezüglich einer Orientierung des ersten Verbindungselements beibehalten wird.

2. Federelement nach Anspruch 1, **dadurch gekennzeichnet, dass** eine Hauptfläche des ersten Federmittels(2) im Wesentlichen parallel zu einer Hauptfläche des zweiten Federmittels (3) ist.

3. Federelement nach Anspruch 1 oder 2, **gekennzeichnet durch** mindestens ein weiteres Federmittel aus elastischem Material, welches im Wesentlichen dieselbe federnde Länge aufweist wie das erste und das zweite Federmittel (2, 3), und mit seiner Hauptfläche parallel zu den Hauptflächen des ersten und des zweiten Federmittels (2, 3) am ersten Verbindungselement (4) und am zweiten Verbindungselement (5) befestigt ist.

4. Federelement nach einem der Ansprüche 1 bis 3, **dadurch gekennzeichnet, dass** es aus einem einheitlichen Material gefertigt ist.

5. Federelement nach einem der Ansprüche 1 bis 4, **dadurch gekennzeichnet, dass** es einstückig ausgebildet ist.

6. Federelement nach einem der Ansprüche 1 bis 5, **dadurch gekennzeichnet, dass** das elastische Material Stahl, insbesondere Werkzeugstahl, ist.

7. Federelement nach einem der Ansprüche 1 bis 6, **gekennzeichnet durch** eine Abstützung (9), welche einen Federweg des Federelements (1) derart begrenzt, dass eine Überlastsicherung geschaffen wird.

8. Schweissmaschine, insbesondere in Portalbauweise, **dadurch gekennzeichnet, dass** sie ein Federelement nach einem der Ansprüche 1 bis 7 umfasst.

9. Schweissmaschine nach Anspruch 8, **dadurch gekennzeichnet, dass** eine Schweisselektrode (16) am zweiten Verbindungselement (5) des Federelements (1) angeordnet ist, und die Schweisselektrode (16) durch das Federelement (1) während eines Schweissvorgangs nachgesetzt wird.

10. Verwendung des Federelements nach einem der Ansprüche 1 bis 7 in einer Schweissmaschine (12), wobei eine Schweisselektrode (16) am zweiten Verbindungselement (5) des Federelements (1) angeordnet ist, und die Schweisselektrode (16) durch das Federelement (1) während eines Schweissvorgangs nachgesetzt wird.
